Europäisches Patentamt

European Patent Office

Office européen des brevets

(11) Veröffentlichungsnummer: **0 334 998 B1**

(19)

(12) **EUROPÄISCHE PATENTSCHRIFT**

(45) Veröffentlichungstag der Patentschrift: **11.11.92**

(21) Anmeldenummer: **88118560.7**

(22) Anmeldetag: **08.11.88**

(51) Int. Cl.⁵: **B01D 67/00, C08J 9/28**

(54) Verfahren zur Herstellung einer mikroporösen Folie.

(30) Priorität: **30.03.88 DE 3810757**

(43) Veröffentlichungstag der Anmeldung:
**04.10.89 Patentblatt 89/40**

(45) Bekanntmachung des Hinweises auf die
Patenterteilung:
**11.11.92 Patentblatt 92/46**

(84) Benannte Vertragsstaaten:
**DE FR GB IT**

(56) Entgegenhaltungen:
**FR-A- 1 466 610**
**US-A- 3 709 774**

**PATENT ABSTRACTS OF JAPAN, Band 10,
Nr. 123 (C-344)[2180], 8. Mai 1986; & JP-A-60
250 049 (FUJI SHASHIN FILM K.K.) 10-12-1985**

(73) Patentinhaber: **Firma Carl Freudenberg
Höhnerweg 2-4
W-6940 Weinheim/Bergstrasse(DE)**

(72) Erfinder: **Groitzsch, Dieter, Dr.
Hermann-Löns-Strasse 6a
W-6945 Hirschberg(DE)**
Erfinder: **Minami, Akinori
Jmajuku-cho 348
Moriyama-shi Shiga-ken 524(JP)**
Erfinder: **Schaut, Gerhard, Dr.
Brunhildstrasse 9
W-6944 Hemsbach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung einer mikroporösen, membranartigen polymeren Folie auf einem Trägermaterial, gemäß den Merkmalen des Oberbegriffs von Anspruch 1. Solche Folien sind geeignet als Membranen für Trennverfahren zur Rohstoffgewinnung bzw. -rückgewinnung in der chemischen, der Pharma-, der Milch- und Nahrungsmittelindustrie. So werden beispielsweise gestützte Membranen zur Salz- und Trinkwassergewinnung (Meerwasserentsalzung) bei der Elektrodialyse eingesetzt.

Im Bereich der Wundtherapie kommen beispielsweise Membranen aus Polyurethan oder Polytetrafluorethylen, auf einen Schaumstoff aufgetragen, als temporärer Hautersatz zur Verwendung. Die Membran hält die Wunde feucht, verhindert den Durchtritt von Bakterien, läßt aber Sauerstoff, der für den Heilungsprozeß notwendig ist, penetrieren.

Extrem hydrophobe Abdeckungen aus mikroporösen Folien, die vollständig wasserdicht sind, aber trotzdem wasserdampfdurchlässig bleiben, werden an Bekleidungsstücken und Schuhen sowie bei medizinischen Tüchern, Operationsabdeckungen und im Operationsbereich getragenen Bekleidungen verwendet.

Die Bildung dieser Folien erfolgt hauptsächlich nach zwei verschiedenen Methoden:

1. Bildung eines Polymerfilmes durch Extrusion, durch Eintrocknung einer Polymerlösung oder durch Polymerisation in Lösung.

Bei der Polymerisation bzw. Polyaddition von z.B. Polyurethan werden die Ausgangskomponenten in einem Lösungsmittel gelöst, welches diese zwar zu lösen vermag, das Endprodukt hingegen nicht. Somit wird das Polyurethan mit fortschreitender Polyaddition zunehmend weniger löslich, bis es schließlich ausfällt (BE-A-719 272).

In US-A-4,466,931 wird ein Verfahren beschrieben, welches nach einem ähnlichen Membranbildungsprinzip arbeitet. Eine Monomer- oder Oligomerlösung wird photopolymerisiert, überschreitet dadurch spontan die Löslichkeit und fällt als mikroporöser Film aus.

2. Bildung einer Gelschicht durch einen Sol-Gel-Übergang mit anschließender Trocknung.

Zu dem zweiten Prinzip gehören alle Verfahren, bei denen nach dem Aufstreichen einer Polymerlösung das Polymer durch Einfahren in ein Fällungsmittelbad oder Bedampfen mit Fällungsmittel auskoaguliert wird. Voraussetzung ist dabei, daß das Fällungsmittel im Lösungsmittel des Polymeren löslich ist.

Am weitesten verbreitet ist die Koagulation von Polyurethan, gelöst in Dimethylformamid, durch Wasser. Nachteilig ist hierbei die Tatsache, daß der Koagulationsprozeß nur langsam abläuft und die Auswaschung des Lösungsmittels sowie dessen Regenerierung sehr aufwendig sind.

Stand der Technik ist weiterhin die Verdampfungskoagulation, die ebenfalls über eine Gelbildung verläuft. Die Polymerlösung besteht aus einem bezüglich des Polymeren guten und einem schlechten Lösungsmittel. Letzteres dient als Quell- oder Fällungsmittel für das Polymere. Das gute Lösungsmittel muß leichter flüchtig sein als das Fällungsmittel. Während des Trocknungsvorganges verdampft das leichter flüchtige Lösungsmittel zuerst, und das Quell-bzw. Fällungsmittel reichert sich immer mehr an. Ab einer kritischen Konzentration erfolgt schließlich die Ausfällung des Polymeren, d.h. die Ausbildung der Membranstruktur. Dieses Verfahren wird beispielsweise in DE-C-16 94 059 beschrieben. Einen Spezialfall dieser Verdampfungskoagulation stellt das in Melliand Textilberichte 11 (1986), 824 bis 829, beschriebene Verfahren dar, wo ein hydrophobes Polyurethan in Methylethylketon gelöst, mit etwas Toluol als Quell- bzw. Fällungsmittel versetzt und in diese Lösung Wasser mit einem hydrophilen Polyurethan-Emulgator mittels eines Mixers bzw. Homogenisators einemulgiert wird.

Wasser ist zu 30 Teilen in 100 Teilen Methylethylketon von 20°C löslich. Damit wirkt nicht nur das Toluol, sondern auch das Wasser als Verdünnungsmittel. Es entsteht eine Wasser-in-Öl-Emulsion. Mit stufenweise steigender Temperatur wird zunächst das Methylethylketon verdampft, dann das Toluol und schließlich das Wasser.

Die genannten Verfahren haben schwerwiegende Nachteile. Um ein selektives Verdampfen des leichter flüchtigen Lösungsmittels zu gewährleisten, muß bei relativ niedriger Temperatur d. h. relativ langsam, verdampft werden. Der Grund hierfür liegt vor allem darin, daß die Siedepunkte des organischen Lösungsmittels und des organischen Nichtlösers ("schlechtes" Lösungsmittel) sowie des Wassers relativ eng beieinanderliegen. Ein weiterer Nachteil besteht darin, daß die Lösungs- und Fällungsmittel zumindest bis zu einem gewissen Grade ineinander löslich sind und eine Trennung zum Zwecke ihrer Rückgewinnung sehr aufwendig und schwierig ist, so daß in der Praxis meist einfach durch Verbrennung entsorgt wird. Da mit stark verdünnten Polymerlösungen gearbeitet wird, fallen hohe Lösungsmittelmengen an, die mangels einer wirtschaftlich nutzbaren Rückgewinnung die Verfahren ebenfalls verteuern.

Aufgabe der vorliegenden Erfindung ist es daher, ein Verfahren zur Herstellung mikroporöser, membranartiger polymerer Folien bzw. Beschichtungen zur Verfügung zu stellen, welches die Gelbildung aus einer Wasser-/Polymerlösung - Emulsion nutzt und wobei Lösungsmittel und Wasser nach dem Aufbringen auf ein Trägermaterial, entweder im Direkt- oder im Transferverfahren, nacheinander verflüchtigt werden. Die oben geschilderten Nachteile, insbesondere der hohe Bedarf an Lösungsmittel, die ausgedehnte Verarbeitungszeit sowie die Entsorgungs-und Rückgewinnungsprobleme des Lösungsmittels, sollen dabei vermieden werden. Die Verwendung von Fällungs- oder Quellmitteln soll entfallen.

Die Lösung dieser Aufgabe besteht in einem Verfahren mit den kennzeichnenden Merkmalen des Anspruchs 1. Bevorzugte Varianten sind in den Unteransprüchen aufgeführt.

Das Gewichtsverhältnis von Polymerlösung zu wäßrigem Porenbildner beträgt 90/10 bis 60/40. Das Porenvolumen steigt mit zunehmendem Anteil der Wasserphase und liegt im Bereich von 30 bis 90 Volumenprozent, bezogen auf das Gesamtvolumen der Membran.

Im Gegensatz zu den bekannten Verfahren wird das Polymer nicht in einem Lösungsmittelgemisch aus mindestens zwei Komponenten, d. h. viel Löser und wenig Nichtlöser, gelöst, sondern nur in einem einzigen Lösungsmittel, und zwar in Methylenchlorid (Dichlormethan) Das eindispergierte Wasser ist absolut unlöslich darin, wobei das erfindungsgemäße Verfahren überraschenderweise ohne jeglichen Nichtlöser bzw. ohne Fällungsmittel durchgeführt werden kann. Deswegen liegt im eigentlichen Sinne keine Verdampfungskoagulation mehr vor.

Wegen des hohen Dampfdruckes von Methylenchlorid bereits bei Raumtemperatur kann seine rasche Verflüchtigung nach dem Aufbringen der fertiggemischten Paste auf das Trägermaterial bei Lufttemperaturen von 20 bis 35°C problemlos erfolgen, insbesondere dann, wenn die Verdunstung durch Luftventilation beschleunigt wird. Der Siedepunkt des Methylenchlorids liegt bei +39°C.

Die völlige Unlöslichkeit zwischen Wasser und Methylenchlorid sowie die weit auseinanderliegenden Siedepunkte (98°C bzw. 39°C) bewirken dabei ein vollständig selektives Verdunsten des Methylenchlorids. Ferner wird dadurch auch die Lösungsmittel-Regenerierung erheblich vereinfacht. Zweckmäßig wird man das Methylenchlorid durch Absorption auf Aktivkohle binden und aus ihr anschließend mit Wasserdampf wieder austreiben. Nach der Kondensation entstehen 2 Phasen, aus denen das reine Methylenchlorid abgetrennt werden kann.

Es wird danach direkt dem Prozeß der Auflösung des Polymeren wieder zugeführt. Etwa vorhandenes Restwasser stört nicht, da im Verlauf des erfindungsgemäßen Verfahrens ohnehin wieder eine wäßrige Phase eindispergiert wird.

Im Methylenchlorid können erfindungsgemäß auch mehrere Polymeren gelöst sein, wobei es nicht stört, wenn die Polymeren zur Koazervatbildung neigen. Durch Polymer-Mischungen können z.B. die Härtewerte der Membran beeinflußt werden. Die hierzu erforderlichen Vorversuche und Kenntnisse sind dem Fachmann geläufig.

Die Viskosität der fertigen Polymerlösungen muß im Bereich von 0,1 bis 1,0 Pa•s liegen. Sie stellt die das Membrangerüst bildende Phase dar.

Die darin einemulgierte wäßrige Phase mit den in ihr gelösten bzw. feinverteilten Hilfsstoffen bildet beim Trocknen die Porenstruktur aus.

Die Porengröße hängt vom Dispersitätsgrad der Emulsion ab, d.h. je feiner die wäßrige Phase in der Methylenchlorid-Lösung verteilt ist, um so kleiner werden die Poren ausgebildet. Das Porenvolumen wird mitbestimmt durch das Volumenverhältnis der organischen Lösungsmittelphase zur Wasserphase, durch die Trocknungsbedingungen während der Verdampfung des Wassers, die Kaschierbedingungen im Falle der Transferierung von einem Primär- zu einem Sekundärträger (Druck, Temperatur) und die Shore- bzw. Kugeldruckhärte des verarbeiteten Polymeren. Die Steuerung dieser Einflüsse ist dem auf dem gattungsgemäßen Gebiet tätigen Fachmann bekannt. Eine Erhöhung des Wasserphasenanteils erhöht das Porenvolumen.

Durch das Verdampfen des Methylenchlorids erfolgt die Aufkonzentration des Polymeren und schließlich die Koagulation. Dieser Vorgang läuft sehr schnell ab wegen der bereits bei Raumtemperatur sehr hohen Flüchtigkeit des erfindungsgemäß eingesetzten Lösungsmittels Methylenchlorid. Es entsteht eine stabile Wasser-In-Polymerlösung - Emulsion, im folgenden auch "Paste" genannt.

Die Viskosität der wäßrigen Phase wird mit an sich bekannten Verdickungsmitteln (Menge zwischen 0,3 bis 6 Gew.%, bezogen auf die wäßrige Phase) auf 0,07 bis 0,5 Pa•s eingestellt. Die Verdickungsmittel dürfen nur in Wasser und nicht in Methylenchlorid löslich sein. Als zweckmäßig erwiesen sich dabei anionische Polyelektrolyte mit neutralisierten Carboxylgruppen aus der Reihe der Acrylsäure-Homo- und/oder -copolymeren, oder nichtionische Verdicker, z.B. wasserlösliche Polymeren mit freien OH-Gruppen, wie Polyvinylalkohole und Zellulose-Derivate.

Die Wahl des Verdickungsmittels oder der Verdickerkombination hängt im wesentlichen davon ab, ob eine hydrophile oder hydrophobe Membran erzeugt werden soll. Bei wasserdichten Poromer-Beschichtungen mit hoher Wasserdampfdurchlässigkeit ist eine hydrophobe Membran notwendig. Es ist dem Fachmann bekannt, in solchen Fällen entweder sehr wenig Verdicker einzusetzen oder solche Typen zu verwenden, die sich kalt oder heiß vernetzen lassen und dadurch ihren hydrophilen Charakter verlieren.

Das erfindungsgemäße Verfahren ist auch für die Transferdruck-Technik geeignet:

Dabei wird die Emulsion auf die Trennpapier-Seite eines Transfer-druck-Zwischenträgers aufgerakelt, nach dem Abdampfen des Methylenchlorids das Trennpapier mit der wasserfeuchten Membran auf die Haftmassenseite eines flächigen Endträgers aufkaschiert, das Laminat bei 100 bis 180°C unter Flächendruck versiegelt und entwässert und zuletzt das Trennpapier abgelöst. Eine detaillierte Beschreibung dieses Verfahrens wird in den Beispielen aufgezeigt.

Für die Erfindung eignen sich alle methylenchloridlöslichen, filmbildenden, thermoplastischen Polymere: Thermoplastische Hartpolymere mit einer Kugeldruckhärte von 80 bis 200 N/mm$^2$, wie z.B. Polstyrol, Polycarbonat, Celluloseacetat, Copolyester aus Hydroxybuttersäure und Hydroxylvaleriansäure, Polysulfone, Polymethacrylate, Polyethersulfone, Polyetherimide, Polyphenylenoxide, Copolymerisate aus Acrylester, Styrol und Acrylnitril (ASA) sowie Copolymerisate aus Vinylchlorid/Vinylacetat, Vinylchlorid/Acrylat oder Vinylchlorid/Acrylat/Vinylbutylether, sind geeignet, wenn das Trägermaterial, auf das die Memban übertragen werden soll, steif und unflexibel ist.

Für flexible, weiche und textilartige Träger dagegen eignen sich weichere Polymere mit einer Härte von 25 bis 70 Shore D; vorteilhaft sind hier thermoplastische Elastomere mit segmentierter Struktur, stets vorausgesetzt, daß sie in Dichlormethan löslich sind. Besonders bevorzugt sind Copolyester-Elastomere, die aus Polyester-Hartsegmenten (beispielsweise Polybutylenterephthalat) und Polyether-Weichsegmenten (beispielsweise Polytetramethylenether) aufgebaut sind. Geeignet sind auch Polycarbonat-Polysiloxan-Blockcokondensate oder Styrol-Butadien-Styrol-Copolymere. Organopolysiloxan-Polycarbonat-Blockcopolymere sind elastisch, zugfest, hydrolysestabil und gut elektrisch isolierend. Diese Blockcopolymere entstehen aus der Umsetzung hydroxialkylen-terminierter Polydimethylsiloxane, 2,2-bis(4- Hydroxivinyl)-propan und Phosgen in Dichlormethan als Lösungsmittel. Sie sind in den US-A-3,189,662 und US-A-3,419,634 als methylenchlorid-löslich beschrieben.

Lineare Polyurethane und Polyurethanharnstoffe, die aus aromatischen oder aliphatischen Diisocyanaten und aliphatischen oder aromatischen Polycarbonatdiolen oder Polyestercarbonatdiolen aufgebaut sind, haben sich für die erfindungsgemäße Anwendung ebenfalls als geeignet erwiesen, z.B. Polyesterpolycarbonatpolyurethane, Polycarbonatpolyurethane, Polyesterpolycarbonat-Polyurethanharnstoffe oder Polycarbonatpolyurethanharnstoffe.Bei der Auswahl geeigneter Polyurethane ist jedoch besonders auf die Löslichkeit in Methylenchlorid sowie die thermische Beständigkeit des porösen Filmes zu achten, was die Verwendung dieser Polymerenklasse meist etwas weniger vorteilhaft macht.

Nach Bedarf können der wäßrigen Phase die bekannten Zusatzstoffe, wie z.B. Emulgatoren, Pigmente, Vernetzer, Hydrophobiermittel, ölabweisende oder alkoholabweisende Mittel und antimikrobielle Agenzien, zugemischt werden.

Als Hydrophobiermittel sind z.B. geeignet selbstvernetzende Polysiloxane mit SiH-Gruppen.

Als Vernetzer für die in den Pasten enthaltenen Polymeren und insbesondere für den carboxyl- oder hydroxylgruppenhaltigen Verdicker dienen beispielsweise Melamin- und Harnstoff-Formaldehydharze, Polyepoxide, Polyaziridine und Polycarbodiimide.

Die wegen der partiellen Löslichkeit des Wassers in dem Lösungsmittel bei den vorbekannten Verfahren häufig auftretenden Unverträglichkeiten und Pasteninstabilitäten (die Ingredienzien können in die Polymerlösung gelangen) werden bei dem erfindungsgemäßen Verfahren wegen der völligen Unlöslichkeit des Wassers in Methylenchlorid weitgehend ausgeschlossen. Die Pastenrezeptierung wird dadurch in der Praxis erheblich erleichtert.

Ein Zusatz wäßriger Polymerdispersionen oder wasserlöslicher Harze zur wäßrigen Phase in Mengen von 0,01 bis 10 Gew.-% ist besonders dann vorteilhaft, wenn das in Methylenchlorid gelöste Polymer selbst über keine vernetzungsfähigen Gruppen in der Polymerkette oder an deren Enden verfügt, wie dies beispielsweise bei Polyester-Elastomeren der Fall ist.

Die Membranpolymer-Matrix wird in diesem Fall im fertigen Zustand von einem vernetzten Film der wäßrigen Polymerdispersion überzogen und bestimmt die physikalischen Eigenschaften der Folie mit. Thermisch wenig widerstandsfähige, nicht chemisch-reinigungsbeständige, unvernetzte Membranbildungspolymere können durch den Überzug des vernetzten Polymeren in diesen Eigenschaften verbessert werden.

Bei einer kontinuierlichen Fertigung ist es notwendig, zumindest den Betrag der Verdunstungskälte, der dem Material entzogen wird, durch einen warmen Luftstrom wieder zuzuführen. Zur Erzielung hoher Produktionsgeschwindigkeiten, wie z.B. 20 bis 30 m/min, ist es daher zweckmäßig, die Temperatur der Luft bzw. des gasförmigen, lufthaltigen Mediums aus der Lösungsmittelrückgewinnungsanlage auf höchstens 80°C anzuheben.

Die erfindungsgemäße Streichpaste eignet sich für das Direkt und das Transfer-Beschichtungsverfah-

4

ren. Nach Abschluß des Emulgiervorganges werden - am besten durch Stehenlassen - die eventuell eingerührten Luftblasen aus der Paste entfernt. Aufgrund des hohen spezifischen Gewichtes des Methylenchlorids von 1,336 g/cm$^3$ treiben die Luftblasen nach oben. Der Pastenabzug sollte daher von unten, d.h. im Gegenstrom zur Pastenentlüftung, erfolgen.

Um beispielsweise die Beständigkeit der erfindungsgemäß hergestellten Membran gegen Lösungsmittel-Einflüsse zu erhöhen, kann im Anschluß an die vollständige Trocknung das Durchführen einer thermischen Nachvernetzung zweckmäßig sein.

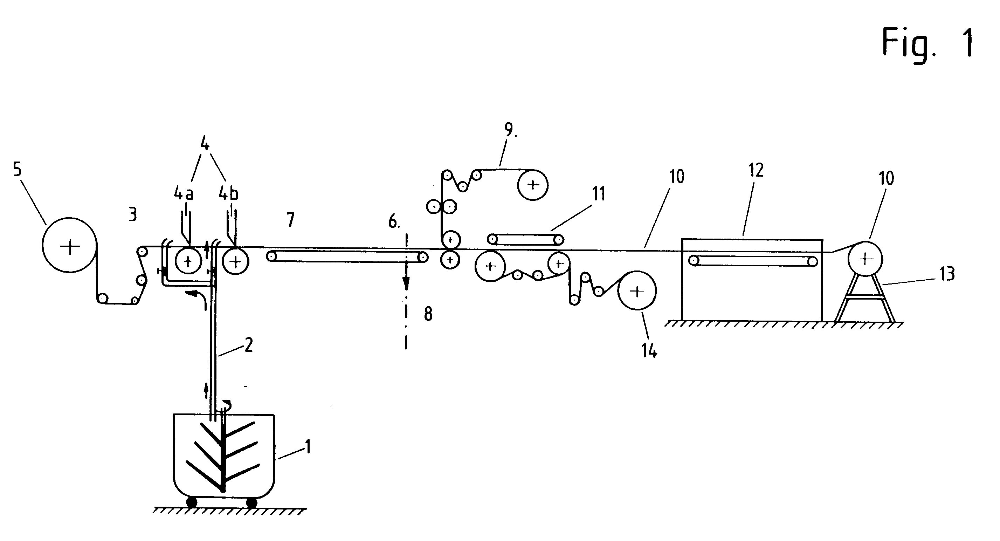

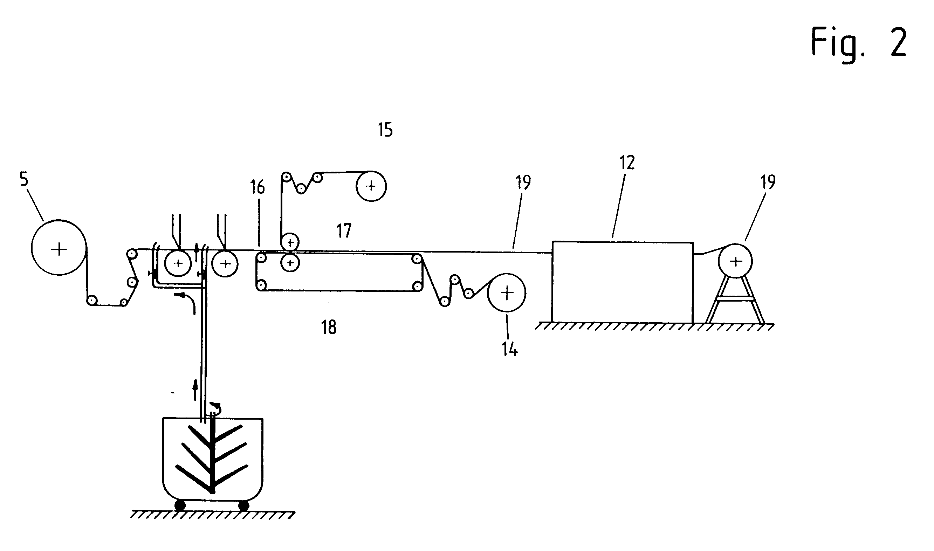

Im folgenden wird anhand der Figuren 1 und 2 das Prinzip des erfindungsgemäßen Verfahrens beispielhaft verdeutlicht. Es zeigen

Figur 1 ein Beschichtungsverfahren auf Trennpapier und die anschließende Transferierung auf einen flexiblen Träger.

Figur 2 ein weiteres Transferverfahren.

Zunächst bei Figur 1 betrachtet.

Die Herstellung der Paste erfolgt durch Zugabe der wäßrigen, verdickten Komponente in die Methylenchloridlösung des Polymeren unter Rühren und Homogenisieren in üblichen Rühr-oder Emulgier-/Dispergiergeräten. Die gesamte Pastenherstellung wird in geschlossenen Behältern 1 vorgenommen.

Die Paste 2 wird über die Pastenzuführung 3 mit Hilfe einer Tandemrakel 4 auf Trennpapier 5 aufgebracht. Hierdurch wird ein naß-in-naß-Auftrag ohne Zwischentrocknung erreicht und damit die Bildung von Pinholes (nadelstichartige Vertiefungen) vermieden. Die beiden Rakelmesser 4 a und 4 b stehen kurz hintereinander.

Nach dem Verlassen des Rakelbereiches verflüchtigt sich das Methylenchlorid in dem langgestreckten Bereich 7, unterstützt durch Ventilation mit Luft 6 von 20 bis 60°C. Die Methylenchlorid-Dämpfe werden über die Leitung 8 abgeführt und nach Aktivkohleabsorption/Wasserdampfextraktion als Flüssigkeit dem Prozeß der Herstellung der Polymerlösung wieder zugeführt. Ein vollständiges Lösungsmittelrecycling ist dadurch gewährleistet. Die Lösungsmittelrückgewinnung kann auch durch Auskondensation aus dem methylenchloridhaltigen Luftstrom erfolgen.

Beim Verlassen des Verdampfungsbereiches 7 besteht der Strich nur noch aus Membranmatrix, deren Poren mit der wäßrigen Phase ausgefüllt sind. Die Membranoberfläche ist ebenfalls mit Wasser benetzt. An dieser Stelle ist also die Membranstruktur schon vollständig, ohne Verwendung eines Trockners, ausgebildet.

Es folgt die Transferierung der Folie auf einen flexiblen textilen Träger 9, wie beispielsweise Vliesstoff, Gewirke, Gelege, leichtes Gewebe. Die auf dem Trennpapier liegende Membran kann bei Anwendung des erfindungsgemäßen Verfahrens im nassen Zustand, d. h. vor der Trocknung, auf den Träger 9 übertragen werden. Dieser ist membranseitig mit Siegelhaftmassenpunkten bedruckt oder enthält eine Schicht aus heißsiegelfähigen Fasern. Die Übertragung der nassen Membran auf den Träger erfolgt sehr schnell, d.h. im Bereich einiger Sekunden.

Das flexible Laminat 10 besteht aus Träger und poröser Membran, verläßt noch im nassen Zustand das Kaschierwerk 11 und wird anschließend im Trockner 12 getrocknet, gegebenenfalls thermisch vernetzt und am Aufroller 13 aufgewickelt. Das Trennpapier wurde bereits am Aufroller 14 abgetrennt und steht für einen mehrmaligen Einsatz zur Verfügung.

Das Membranpolymer hat eine ausreichende thermische Beständigkeit, um die Verdampfung des Wassers ohne Porenverschluß durch Verschmelzen bzw. Kollabieren zu überstehen. Die Trocknungsluft ist auf 100 bis 180°C aufgeheizt, damit eine ausreichende Vernetzung bzw. Aushärtung des Membranpolymeren bzw. -präpolymeren und der Additive erfolgen kann. Es ist zweckmäßig, zu Anfang tiefere und zu Ende der Trocknung höhere Temperaturen einwirken zu lassen.

Das erfindungsgemäße Verfahren zeichnet sich durch seine Einfachheit, seine niedrigen Fertigungskosten und seine Möglichkeit zum Lösungsmittelrecycling aus. Für die Trägerbeschichtung können kostengünstige, einfache Maschinen eingesetzt werden. Die Verdampfungsleistung ist sehr niedrig, d. h. die Trocknerdimensionen können relativ klein gehalten werden.

Es ist möglich, das Trennpapier durch Endlosbänder zu ersetzen, beispielsweise aus nichtrostendem Edelstahl oder feinmaschigem Gewebe mit PTFE-Überzug.

In einer weiteren Ausführungsform der Erfindung (Figur 2) kann die noch methylenchlorid-haltige Membran im Sol/Gel - Zustand auf einen haftmassenfreien Träger übertragen werden. In diesem Fall erfolgen die Zuführung des Trägers 15 und die Kaschierung an der Stelle 16 in der Methylenchlorid-Verdunstungszone 17, d.h. an einer Stelle, wo sich die Membranmatrix noch in einem klebrigen Zustand befindet. Dort kann die Kaschierung lediglich durch Andrücken mit einer Walze 18 erfolgen. Nach dem vollständigen Verdampfen des Methylenchlorids ist der Träger an die Membran so fest gebunden, daß ein problemloses Ablösen des Laminates 19 vom Trennpapier bzw. vom Endlosband möglich ist.

Die erfindungsgemäß hergestellte Beschichtung kann hydrophil oder hydrophob eingestellt werden. Im Bekleidungs-und Schuhbereich sowie bei OP-Abdeckungen und -Kitteln werden ausschließlich hydrophobe, mikroporöse Membranen benötigt, um Wasser und Alkohol zurückzuhalten und Wasserdampf durchtreten zu lassen. Ferner eignet sich eine solche hydrophobe Folie für Regenschutzbekleidung, Sportbekleidung, Handschuhe und Schuhe.

Die Membran bleibt jedoch nicht auf solche Anwendungen beschränkt, wo hohe Wasserdampfdurchlässigkeiten verlangt und Wasser zurückgehalten werden soll. Durch Weglassen hydrophober oder oleophober Additive, welche die Oberflächenspannung des Membranmaterials verändern, kann dieses den jeweiligen Anforderungen angepaßt werden, wobei die Porenstruktur in jedem Fall beibehalten wird.

Im folgenden werden anhand von drei Beispielen für die vorliegende Erfindung charakteristische Rezepturen aufgezeigt.

Beispiel 1:

A) Herstellung der Polymerlösung in Methylenchlorid:

Ein handelsübliches Polyesterelastomer-Pulver mit segmentiertem Polymerkettenaufbau, bestehend aus Polybutylenterephthalat-Hartsegmenten und Polytetramethylenether-Weichsegmenten, mit einer Härte von 40 Shore D, einem spezifischen Gewicht von 1,16 $g/cm^3$ und einem Schmelzpunkt von 168°C wird in Dichlormethan gelöst. Die auf 12 Gewichtsprozent eingestellte Lösung weist eine Viskosität von 0,2 Pa•s auf, gemessen mit dem Brookfield-Rotationsviskosimeter bei 20 UpM mit Spindel Nr. 2.

B) Herstellung der wäßrigen Phase:

Zu 93 Gewichtsteilen entionisiertem Wasser werden 1,9 Gewichtsteile einer 40 %igen handelsüblichen wäßrigen Ionomer-Dispersion aus aliphatischem, vernetzbarem Polyesterurethan gegeben. Die Teilchengröße der Dispersion beträgt 0,1 bis 0,4 $\mu$m. Nach Zugabe von 2,0 Gewichtsteilen einer 25 %igen Polyacrylsäure-Dispersion und 4,0 Gewichtsteilen Ammoniak konz. stellt sich eine Brookfield-Viskosität von 0,14 Pa•s ein, gemessen mit Spindel Nr. 4 bei 20 UpM.

C) Herstellung der Streichpaste:

675 Gewichtsteile der 12 %igen Polymerlösung A werden vorgelegt. Unter intensivem Rühren werden 325 Gewichtsteile der wäßrigen Phase B langsam zugegeben. Es bildet sich eine W/O-Emulsion mit einer Viskosität von 5,5 Pa•s, gemessen mit dem Brookfield-Viskosimeter, Spindel Nr. 4, bei 20 UpM. Der Festgehalt der W/O-Streichpaste beträgt 8,51 Gewichtsprozent.

D) Beschichtung:

Die Streichpaste wird auf ein wasserfestes, hochglänzendes Release-Papier mit Hilfe eines Tandemrakels aufgetragen. Die Naßschichtdicke (Strichstärke) des ersten Rakels beträgt 100 $\mu$m und die des zweiten Rakels 300 $\mu$m. Durch diese Auftragsmethode werden Beschichtungsfehler, wie insbesondere die sogenannten Pinholes, vermieden. Nach ca. 1-minütiger Ventilation mit auf 35°C aufgeheizter Luft aus einem Heizlüfter verflüchtigt sich das Methylenchlorid zu ca. 99 %.

E) Transferierung auf textilen Träger:

Unmittelbar nach Verflüchtigung des Lösungsmittels wird das Trennpapier mit der wasserfeuchten mikroporösen Beschichtung auf die Haftmassenseite eines mit Copolyesterpaste bedruckten Vliesstoffes aufgelegt, die mikroporöse Folie in einer auf 110°C aufgeheizten Bügelpresse auf den textilen, flexiblen Vliesstoff übertragen und das Papier anschließend abgetrennt. Die Preßdauer beträgt ca. 10 Sekunden. Das Gewicht des punktschweißgeprägten Vliesstoffes aus Perlon- und Polyesterfasern ist 25 $g/m^2$ und das der Haftmassenauflage 10 $g/m^2$. Der Erweichungsbereich der Copolyester-Haftmassenauflage beläuft sich auf 85 bis 88°C.

Nach dem Ablösen des wiederverwendbaren Trennpapieres wird das Laminat aus Vliesstoff, Copolyester-Haftmasse und mikroporöser Polyester-Elastomer-Membran naß-in-naß mit einer 5 %igen, nichtionogen eingestellten Fluorcarbonharzemulsion ausgerüstet. Die Naßaufnahme beträgt 50 %, bezogen auf das Laminat-Trockengewicht. Das Gesamtgewicht des ausgerüsteten Laminats ist 56 $g/m^2$, wobei ein

Anteil von 21 g/m$^2$ auf die mikroporöse Beschichtung aus Polyester-Elastomer entfällt. Die mittlere Porengröße, ermittelt aus einer rasterelektronenmikroskopischen Aufnahme, liegt im Bereich von 1 bis 2 $\mu$m. Die Wasserdichtheit, gemessen nach DIN 53 886, beträgt über 150 mbar. Die Wasserdampfdurchlässigkeit nach Mitton, ermittelt am Gesamtlaminat gemäß DIN 53 333, liegt mit einem Wert von 23,1 mg/cm$^2$ h sehr hoch.

Beispiel 2:

Die Herstellung der mikroporösen Beschichtung auf dem Trennpapier erfolgt bis zur Stufe D analog zu Beispiel 1. Die wasserfeuchte Membran wird im Luftstrom von 110°C getrocknet und dann vom Trennpapier abgezogen.

Die Dicke der Folie beläuft sich auf 55 $\mu$m. Aus der Dicke, dem Foliengewicht und der spezifischen Dichte des Polyester-Elastomeren läßt sich das Porenvolumen mit Hilfe der nachfolgenden mathematischen Beziehungen errechnen:

$$\rho_{Membran} = \frac{FG}{D_{Membran} \cdot 10^4} \qquad (1)$$

$$V_{Poren} = \frac{V_{Membran} - V_{Polymer}}{V_{Membran}} \cdot 100 \qquad (2)$$

Für ein Flächengewicht von 1 m$^2$ gilt V = D:

$$V_{Poren} = \frac{D_{Membran} - D_{Polymer}}{D_{Membran}} \cdot 100 \qquad (3)$$

$$D_{Polymer} = \frac{FG}{\rho_{Polymer} \cdot 10^4} \qquad (4)$$

Hierin bedeuten:

$\rho$ Polymer     spezifische Dichte des (kompakten) Polymeren in g/cm$^3$
$\rho$ Membran     spezifische Dichte der Membran in g/cm$^3$
FG     Flächengewicht der Membran in g/m$^2$
$V_{Poren}$     Porenvolumen in %, bezogen auf Gesamtvolumen der Membran
$D_{Membran}$     Dicke der Membran in cm
$D_{Polymer}$     Dicke des kompakten Kunststoffes aus Formel (4) in cm

Durch Einsetzen von $D_{Polymer}$ = 1,16 g/cm$^3$ für das Polyester-Elastomer, der gemessenen Dicke der Membran von 0,055 cm und des ermittelten Flächengewichtes der Membran von 21 g/m$^2$ errechnet sich aus Formel (3) ein Porenvolumen von 67,27 %.

Die Wasserdampfdurchlässigkeit beträgt 27 mg/cm$^2$ h.

Beispiel 3:

Es wird eine 12 Gew.-prozentige Lösung eines handelsüblichen Polyetherimids (ULTEM, Warenzeichen der Fa. General Electric) in Methylenchlorid hergestellt.

Die Streichpaste wird analog Beispiel 1, Teil C, aus 675 Gew.-Teilen 12 %iger Polymerlösung und 325 Gew.-Teilen der wäßrigen Phase B aus Beispiel 1 bereitet.

Die resultierende, 8,51 %ige Streichpaste wird auf ein wasserfestes Release-Papier analog Beispiel 1, Teil D, aufgetragen und das Methylenchlorid verdampft. Als Träger für die Transferierung der Polyetherimid-Membran wird ein 150 g/m$^2$ schwerer, kalanderter, steifer Vliesstoff aus 100 % Polyesterfasern eingesetzt, der auf einer Seite 16 g/m$^2$ Siegelpuder-Auftrag aus Polyethylenvinylacetat aufweist.

Polyetherimid ist im Gegensatz zu dem in den Beispielen 1 und 2 verwendeten Polyester-Elastomer sehr hart und nicht elastisch.

Die nasse Membran wird auf die Siegelseite des Vliesstoffes gelegt und in einer auf 100°C aufgeheizten Bügelpresse auf den Vliesstoff übertragen. Das Release-Papier wird anschließend entfernt.

Im Rasterelektronenmikroskop sind eine stark ausgeprägte Mikroporosität und die schaumstoffartige Struktur der Polyetherimid-Membran erkennbar mit einem Hauptanteil an Porendurchmessern von 0,5 - 5 μm. Das Porenvolumen errechnet sich hier zu 65,3 %. Die Wasserdampfdurchlässigkeit beträgt 25 mg/cm$^2$ h.

## Patentansprüche

**1.** Verfahren zur Herstellung einer mikroporösen, membranartigen, polymeren Folie durch Gelbildung aus einer Wasser-/Polymerlösung - Emulsion, wobei Lösungsmittel und Wasser nach dem Aufbringen auf einen flächigen Träger nacheinander verflüchtigt werden, dadurch gekennzeichnet,

daß man eine mit 0,3 bis 6 Gew.% eines an sich bekannten Verdickungsmittels versetzte, Fällungs- oder Quellmitteln freie wäßrige Phase mit einer Brookfield-Viskosität von 0,07 bis 0,5 Pa•s herstellt, wobei das Verdickungsmittel in Wasser, jedoch nicht in Methylenchlorid löslich ist,

daß man die so hergestellte wäßrige Phase in eine 5 bis 15 %ige Methylenchlorid-Lösung mindestens eines filmbildenden, thermoplastischen, methylenchloridlöslichen Polymeren einemulgiert, wobei das Gewichtsverhältnis Polymerlösung/wäßrige Phase 90/10 bis 60/40 und die Viskosität der Emulsion 0,1 bis 1,0 Pa•s betragen,

daß man sodann die enstandene Emulsion mittels eines Tandemrakels auf das Trägermaterial aufstreicht, das Methylenchlorid durch Beaufschlagen mit einem 20 bis 60°C warmen, gasförmigen Medium verflüchtigt,

und daß man anschließend das Wasser unter Einwirkung einer Temperatur von 100 bis 180°C vollständig entfernt.

**2.** Verfahren nach Anspruch 1, dadurch gekennzeichnet, daß man die Emulsion auf die Trennpapier-Seite eines Transferdruck-Zwischenträgers aufrakelt,

nach dem Abdampfen des Methylenchlorids das Trennpapier mit der wasserfeuchten Membran auf die Haftmassenseite eines flächigen Endträgers aufkaschiert,

das Laminat bei 100 bis 180°C unter Flächendruck versiegelt und entwässert

und daß man zuletzt das Trennpapier ablöst.

**3.** Verfahren nach Anspruch 1 oder 2, dadurch gekennzeichnet, daß man in die wäßrige Phase weitere wasserlösliche, jedoch in Methylenchlorid unlösliche Zusätze, wie Emulgatoren, Pigmente, Vernetzer, wasser-, öl-, schmutz- oder alkoholabweisende und antimikrobiell wirkende Agenzien, einmischt.

**4.** Verfahren nach einem der vorhergehenden Ansprüche, dadurch gekennzeichnet, daß man in die wäßrige Phase vernetzbare wäßrige Polymerdispersionen oder wasserlösliche Harze in Mengen von 0,01 bis 10 Gew.-% einmischt.

## Claims

**1.** A process for making a microporous, membrane-like, polymeric film by gel formation from a water/polymer solution emulsion, solvent and water being evaporated successively after application to a flat carrier, characterised in that an aqueous phase which contains no precipitants or swelling agents, to which 0.3 to 6% by weight of a thickening agent, known per se, has been added and which has a Brookfield viscosity of 0.07 to 0.5 Pa.s is prepared, the thickening agent being soluble in water but not in methylene chloride, in that the aqueous phase thus prepared is emulsified into a 5 to 15% strength methylene chloride solution of at least one film-forming, thermoplastic polymer which is soluble in methylene chloride, the weight ratio of polymer solution/aqueous phase being 90:10 to 60:40 and the viscosity of the emulsion being 0.1 to 1.0 Pa.s, in that the emulsion formed is then spread onto the carrier material by means of a tandem doctor blade and the methylene chloride is evaporated by charging with a hot gaseous medium at a temperature of 20 to 60°C, and in that the water is then removed completely, under the influence of a temperature of 100 to 180°C.

2. A process according to claim 1, characterised in that the emulsion is spread with a doctor blade onto the release paper side of a transfer print intermediate carrier, the release paper is laminated onto a flat final carrier, after the methylene chloride has been evaporated off, with the water-moist membrane on the adhesive composition side, the laminate is sealed and dehydrated at 100 to 180°C under a surface pressure, and in that, finally, the release paper is removed.

3. A process according to claim 1 or 2, characterised in that further additives which are water-soluble but insoluble in methylene chloride, such as emulsifiers, pigments, crosslinking agents, water-, oil-, dirt- or alcohol-repelling agents and antimicrobial agents, are mixed into the aqueous phase.

4. A process according to one of the preceding claims, characterised in that crosslinkable aqueous polymer dispersions or water-soluble resins are mixed into the aqueous phase in amounts of 0.01 to 10% by weight.

**Revendications**

1. Procédé de fabrication d'une feuille polymère microporeuse analogue à une membrane par formation d'un gel à partir d'une émulsion eau/solution de polymère, le solvant et l'eau étant évaporés l'un après l'autre après la mise en place sur un support de grande surface, procédé caractérisé en ce qu'on prépare une phase aqueuse, exempte d'agents de précipitation ou de gonflement, mélangée à 0,3 à 6% en poids d'un agent épaississeur de type connu et ayant une viscosité Brookfield de 0,07 à 0,5 Pa.s, l'agent épaississeur étant soluble dans l'eau mais n'étant pas soluble dans du chlorure de méthylène, en ce qu'on émulsionne la phase aqueuse ainsi préparée dans une solution de chlorure de méthylène contenant 5 à 15% d'au moins un polymère thermoplastique, soluble dans le chlorure de méthylène et pouvant former un film, le rapport de poids entre la solution de polymère et la phase aqueuse étant compris entre 90/10 et 60/40 et la viscosité de l'émulsion étant comprise entre 0,1 et 1,0 Pa.s, en ce qu'ensuite l'émulsion est étalée sur la matière de support au moyen d'un racleur-tandem, le chlorure de méthylène étant volatilisé au moyen d'un agent gazeux chauffé à une température de 20 à 60°C et en ce qu'ensuite on enlève complètement l'eau par un chauffage à une température de 100 à 180°C.

2. Procédé selon la revendication 1, caractérisé en ce qu'on étale par racleur l'émulsion sur le côté papier séparateur d'un support intermédiaire d'impression par transfert, en ce qu'après l'évaporation du chlorure de méthylène, le papier séparateur est appliqué avec la membrane humide sur le côté adhérent d'un support final de grande surface, en ce que la structure stratifiée ainsi obtenue est scellée et déshydratée sous l'effet d'une pression superficielle à une température de 100 à 180°C et en ce qu'on enlève finalement le papier séparateur.

3. Procédé selon la revendication 1 ou 2, caractérisé en ce qu'on mélange à la phase aqueuse d'autres additifs solubles dans l'eau mais cependant insolubles dans le chlorure de méthylène, comme des émulsionnants, des pigments, des agents de réticulation, des agents arrêtant l'eau, l'huile, la crasse ou l'alcool et des agents à action antimicrobienne.

4. Procédé selon une des revendications précédentes, caractérisé en ce qu'on mélange à la phase aqueuse des dispersions de polymères aqueuses et réticulables ou bien des résines solubles dans l'eau, en quantités de 0,01 à 10% en poids.

Fig. 1

Fig. 2

EP 0 334 998 B1